# EUROPEAN PATENT APPLICATION

(11) **EP 3 683 575 A1**
(43) Date of publication of application: **22.07.2020**
(21) Application number: 19152657.3
(22) Date of filing: 18.01.2019
(51) Int. Cl.: G01N 29/024, G01H 3/00, G01N 29/032, G01N 29/34, G01N 29/44

(54) **SYSTEM AND METHOD FOR DETECTING THE PRESENCE OF BUBBLES IN AQUEOUS SOLUTIONS**

(71) Applicant: TE Connectivity Norge AS, 5258 Blomsterdalen (NO)
(72) Inventor: Boe, Hakon, 5081 Bergen (NO); Lie, Bjornar Berge, 5081 Bergen (NO)
(74) Representative: Grünecker Patent- und Rechtsanwälte PartG mbB

(57) **Abstract**

The invention relates to a system (7) for detecting the presence of bubbles (5) in aqueous solutions (3), in particular in urea solutions (4), the system (7) comprising at least one ultrasonic receiver (9) and at least one computing unit (11). In order to detect the presence of bubbles (5) in the solution (3) in a simple and reliable way, wherein the system (7) is configured to receive at least two signals (27, 29) having different frequencies (f) after passage through the solution (3); to compute at least one signal value (31) for each received signal (27, 29), the signal value (31) representing a defined signal property (39, 43, 47); to compare the computed signal values (31) for the at least two signals (27, 29) with each other and/or with at least one predefined reference value (53); to compute at least one deviation (33) of the at least two computed signal values (31) from each other and/or between at least one computed signal value (31) and the at least one predefined reference value (53); and to generate at least one bubble confirmation signal (37) that confirms the presence of bubbles (5) in the solution (3) if the at least one deviation (33) is larger than a predefined threshold value (35). The invention further relates to a method for detecting the presence of bubbles in an aqueous solution.

## Description

The invention relates to a system for detecting the presence of bubbles, in particular microbubbles, in aqueous solutions, in particular in urea solutions, the system comprising at least one ultrasonic receiver and at least one computing unit. The invention further relates to a method for detecting the presence of bubbles in aqueous solutions.

The presence of bubbles in an aqueous solution may have negative effects in certain cases, in particular for the accuracy of measurements in the solution. For example, the properties of diesel exhaust fluid (DEF) often need to be monitored in order to assure the solution's functionality for cleaning diesel exhaust fumes. Thereby, at least one sensor may be placed inside a volume containing the solution. A common way is using a speed of sound measurement for detecting the type and/or quality of the solution in the volume. However, urea solution tends to produce bubbles under vibrations and a measurement of the speed of sound may not be accurate when bubbles are in the solution.

It is therefore an object of the invention to provide a system and a method of the aforementioned type, which allows the detection the presence of bubbles in the solution.

For the system mentioned above, this object is achieved in that the system is configured to receive at least two signals having different frequencies after passage through the solution, to compute at least one signal value for each signal, the signal value representing a defined signal property, to compare the computed signal values for the at least two signals with each other and/or with at least one predefined reference value, to compute at least one deviation of the at least two computed signal values from each other and/or between at least one computed signal value and the at least one predefined reference value, and to generate at least one bubble confirmation signal that confirms the presence of bubbles in the solution if the at least one deviation is larger than a predefined threshold value.

For the method mentioned in the beginning, the object is achieved by a method comprising the steps of receiving at least two signals having different frequencies after passage through the solution, computing at least one signal value for each signal, the signal value representing a defined signal property; comparing the computed signal values for the at least two signals with each other and/or with at least one predefined reference value, computing at least one deviation of the at least two computed signal values from each other and/or between at least one computed signal value and the at least one predefined reference value and generating at least one bubble confirmation signal that confirms the presence of bubbles in the solution if the at least one deviation is larger than a predefined threshold value.

The invention provides a simple and reliable way of detecting bubbles in the solution. In the case of detected bubbles, it can be concluded that a speed of sound measurement may not be performed with required accuracy. Said speed of sound measurement may then be repeated when no bubbles are detected.

To describe the method for detecting bubbles in otherwords, the frequency dependency of certain properties of the received signals is analyzed. If the properties of the received signals show a higher frequency dependency than in a case without bubbles, it can be concluded that bubbles are present in the solution. This is because the frequency dependency of certain properties of the received signals is higher when bubbles are present in the solution. Therefore, the system may be calibrated by measuring the frequency dependency of certain properties of the received signals in a state when it is known that no bubbles are present in the solution. Such a state without bubbles may for example be achieved when the solution is at rest for a certain time. The signals are preferably ultrasonic signals.

It should be noted that the different signals with different frequencies as used in the context of the system and the method according to the invention may be signals which are separated in time and which have a time gap between each two signals. In the alternative, the different signals may also be components of a larger continuous signal with varying frequency. In the latter case, the term "signal" as used herein refers to sections of the larger continuous signal in which the frequency is stable.

In the following, further improvements of the invention are described. The additional improvements may be combined independently of each other, depending on whether a particular advantage of a particular improvement is needed in a specific application. It should be noted that the method according to the invention may in particular be performed with a system according to the invention. Consequently, the improvements and details described with respect to the system also apply for the method and vice versa.

According to a first advantageous embodiment of the system, the system may further comprise at least one ultrasonic transmitter for generating the at least two signals. Thereby, the system itself may be adapted for producing and emitting the signals. The at least one ultrasonic transmitter and the at least one ultrasonic receiver are preferably arranged at a predefined distance from each other. Knowledge of the distance may be helpful for calculating certain properties of the received signals, in particular the speed of sound of a signal.

In order to provide a compact system, the at least one computing unit may be arranged in a common housing at least together with the at least one ultrasonic receiver. Preferably, also the at least one ultrasonic transmitter is arranged inside the common housing. Alternatively, the at least one computing unit may be arranged outside the housing which houses the at least one ultrasonic receiver. The computing unit may then be connected with the at least one ultrasonic receiver via at least one data line that is capable of transmitting electric signals generated from the received signals to the computing unit for the analysis.

The system preferably further comprises at least one reflector which is spaced apart from, and arranged opposite to, the at least one receiver in order to reflect signals to the receiver. Thereby, the path length for signals in the solution may be increased. Because of this, the accuracy of the bubble detection may be increased. If the system is also used for a speed of sound measurement, the accuracy of the speed of sound measurement may also benefit from the increased path length.

In particular when the system also comprises at least one ultrasonic transmitter, the at least one reflector is preferably arranged such that it is spaced apart from, and arranged opposite to, the at least one transmitter and the at least one receiver. Thereby, the path length between the transmitter and the receiver is increased.

According to another advantageous embodiment of the system, the system preferably comprises at least one ultrasonic transducer in which the at least one ultrasonic transmitter and the at least one ultrasonic receiver are combined. Thereby, a simple and compact system may be achieved.

The signal value may comprise at least one of the following: the signal amplitude, the time of flight, the frequency at which a frequency spectrum has its maximum. These properties can be used for analyzing the frequency dependency of the received signals.

The method according to the invention may be improved in that the method further comprises the step of emitting at least two signals with different frequencies into the solution prior to receiving signals. As an alternative, the signals may be transmitted from another entity such that transmitting said signal is not part of the method.

In order to provide a simple way of detecting bubbles in the solution, the time of flight for each of the at least two signals may be computed and used as a signal value for the comparison. If the times of flight of the signals differ more than a predefined threshold value, the presence of bubbles can be assumed. The time of flight may easily be derived by measuring the time between transmitting a signal and receiving the same signal, in particular after reflection on the reflector. The speed of the signals in the solution can easily be derived from the ratio of the path length of a signal and the time between emitting and receiving the signal.

As an alternative to the aforementioned time of flight measurement, envelopes of the at least two received signals may be calculated and used for computing the time of flight of the signals. This may provide a simple and reliable way of computing the time of flight of the signals.

According to another advantageous embodiment of the method, the amplitude of each of the received signals may be computed and said amplitudes may be used for the comparison. In other words, the amplitudes of received signals of different frequencies can be compared to each other. If the deviation of the amplitudes is larger than a predefined threshold value, the presence of bubbles can be assumed.

In order to increase the accuracy of such a comparison of the amplitudes, the amplitudes of the received signals may first be referenced to predefined reference values. In particular, for each frequency or, in other words, for each signal, a predefined reference value may be used. The amplitude of each signal may for example be divided by a corresponding reference value. These referenced amplitudes may then be used as signal values for the comparison.

As a further advantageous way of detecting bubbles, a frequency spectrum may be computed for each received signal and those frequencies at which the spectra have their maxima may be compared. Each frequency, at which a frequency spectrum has its maximum, may be compared to a reference. As an alternative, these frequencies for different signals may be compared with each other. If a computed frequency differs from the reference value and/or from the computed frequency of another signal by more than a predefined threshold value, the presence of microbubbles can be assumed.

In order to quickly provide frequency spectra from the received signals, fast Fourier transformations may be used. For each received signal, a fast Fourier transformation may be performed to provide a frequency spectrum for said signal.

It should be noted that the embodiments described above may easily be combined. In particular, the method may be improved in that first the time of flight is computed and then afterwards the amplitude or the maximum of the frequency spectrum. These embodiments may be combined with each other independently. The aforementioned method may, in particular, be performed by a system that is also capable of performing a speed of sound measurement for analyzing the quality of urea solution.

In the following, the invention and its improvements are described in detail using an exemplary embodiment and with reference to the figure. As described above, the various features shown in the embodiments may be used independently of one another in specific applications.

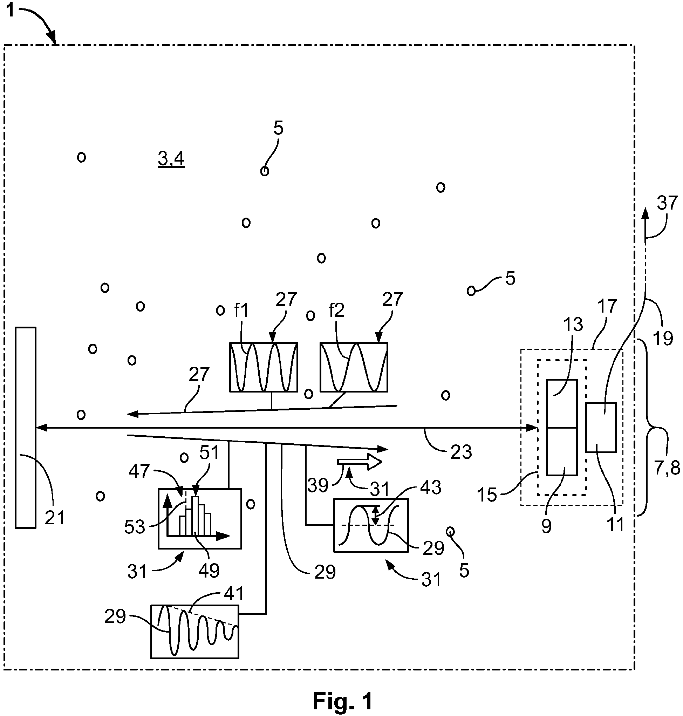

Fig. 1 shows a schematic drawing of a system according to the invention, wherein signals are schematically drawn in order to explain the method according to the invention.

A volume 1, which may be a tank, in particular a tank for diesel exhaust fluid, is at least partially filled with an aqueous solution 3. The solution 3 is preferably a urea solution 4, in particular for cleaning diesel exhaust fumes. In the solution 3, bubbles 5 may be present. The bubbles 5 usually contain air, solution 3 in the gas phase, or a combination of both.

In order to detect the presence of bubbles 5 in the solution 3, in particular microbubbles 5, a system 7 is provided in the volume 1. It should be noted that the term "microbubbles" refers to bubbles 5 that are of sizes below the millimeter range.

The system 7 comprises an ultrasonic a receiver 9 and a computing unit 11. Preferably, the system 7 further comprises an ultrasonic transmitter 13. According to a preferred embodiment, the receiver 9 and the transmitter 13 are combined in an ultrasonic transducer 15.

At least the receiver 9 and the computing unit 11 are preferably arranged in or mounted on a common housing 17. The system 7 is preferably part of a urea sensor system 8 for measuring the quality and/or type of a urea solution 4 in the volume 1. The parts of the system 7, in particular the receiver 9, the transmitter 13 and the computing unit 11 may be the same for both systems 7 and 8. In other words, the method according to the invention may be performed on a urea sensor system 8 or a urea quality measurement may be performed on a system 7 according to the invention.

The computing unit 11 may comprise a computer, a microcontroller, a field-programmable gate array (FPGA) or other suitable devices for calculating the desired values. More preferably, the computing unit 11 is also adapted to control the receiver 9 and/or the transmitter 13. The computing unit 11 is preferably connected via at least one data line 19 to an entity outside the volume 1. Said entity (not shown) may be a display, a computer or any other suitable device for receiving data from the computing unit 11. The data line 19 may be wired or wireless.

For the sake of brevity, the system 7 is described with respect to a transducer 15 in the following. However, as mentioned above, the system 7 may instead comprise a separated receiver 9 and a separated transmitter 13 or only a receiver 9. In the latter case, a transmitter may be present in the volume 1, wherein the transmitter is not part of the system 7.

Preferably, the system 7 further comprises a reflector 21 for reflecting ultrasonic signals. The reflector 21 is arranged opposite to and spaced apart from the transducer 15 at a distance 23. Between the transducer 15 and the reflector 21, solution 3 may be present when the volume 1 is filled with the solution 3. The reflector 21 increases the path length 25 (not shown) which, in the present embodiment, is given by two times the distance 23.

In the alternative, the reflector 21 can be omitted and a receiver 9 and transmitter 13 may be arranged spaced apart from each other in the volume 1, said distance defining the path length 25 in the solution 3.

For detecting bubbles 5 in the solution 3, the transducer 15 may generate and emit signals 27 into the solution 3 towards the reflector 21. These transmitted signals 27 have different frequencies f. Preferably, at least two signals 27 having different frequencies f from a set of frequencies [f1, f2, ..., fn] are emitted by the transducer. Two different signals 27 are exemplarily shown in Fig.1. Each signal 27 preferably has a fixed frequency f.

During the passage through the solution 3, the signals 27 can be altered due to the properties of the solution 3, in particular when bubbles 5 are present in the solution 3. These altered signals 27 may be received as received signals 29 by the transducer 13. These received ultrasonic signals 29 are then converted into electronic signals and further processed by the computing unit 11.

Preferably, the computing unit 11 computes at least one signal value 31 for each received signal 29, wherein the signal value 31 represents a defined signal property.

These computed signal values 31 are preferably compared for different signals 27, 29. In other words, the signal values 31 are compared for different frequencies f. Thereby, the frequency dependency of the signals 27, 29 can be analyzed. Additionally or alternatively, the signal values 31 may also be compared to predefined reference values for the detection of bubbles 5.

In order to decide if bubbles 5 are present in the solution 3, the deviation 33 (not shown) between two signal values 31 for different frequencies f may be compared to a predefined threshold value 35 (not shown). If the deviation 33 exceeds the threshold value 35, then the presence of bubbles 5 in the solution 3 may be concluded. The computing unit 11 may then generate at least one bubble confirmation signal 37 that can be transmitted via the data line 19.

In order to quickly detect bubbles 5 in the solution 3, the time of flight 39 for each signal 27, 29 may be computed. The time of flight 39 is indicated by an arrow in Fig.1. The time of flight 39 is defined as the time that it takes for a signal 27, 29 to travel along the path length 25 through the solution 3.

The times of flight 39 for signals 27, 29 having different frequencies f can be compared by the computing unit 11. If the times of flight 39 differ from each other by a deviation 33 that exceeds a predefined threshold value 35, then the presence of bubbles 5 in the solution 3 may be confirmed.

Additionally, or in the alternative, for each signal 27, 29, an envelope 41 may be calculated by the computing unit 11. The time of flight 39 may then be calculated for each envelope 41 by the computing unit 11. These times of flight 39 for different envelopes 41 may then be compared as described above.

According to another advantageous way of detecting bubbles 5, the amplitude 43 of each received signal 29 can be used as signal value 31. The amplitudes 43 for signals 27, 29 having different frequencies f can be compared with each other. If the deviation 33 between the amplitudes 43 is larger than a predefined threshold value 35, the presence of bubbles can be concluded. In a preferred additional method step, the amplitudes 43 may be referenced using a predefined reference value 45 for each amplitude 43 before the amplitudes 43 of different signals 29 are compared with each other. For example, the amplitudes 43 may be referenced by dividing each amplitude 43 by a predefined reference value 45.

For each received signal 27, 29, a frequency spectrum 47 may be computed by the computing unit 11. In particular, the frequency spectrum 47 may be computed using a fast Fourier transformation (FFT). Using this frequency spectrum 47, the frequency 49 at which the frequency spectrum 47 has its maximum 51 can be calculated. This frequency 49 can be compared to a predefined reference value 53 (indicated by a dotted line). The reference value 53 may, in this case, be the starting frequency f of the transmitted signal 27. If the deviation 33 between the frequency 49 and the reference value 53 exceeds a predefined threshold value 35, the presence of bubbles 5 can be concluded.

### REFERENCE NUMERALS

- 1: Volume
- 3: Solution
- 4: Urea solution
- 5: Bubbles
- 7: System
- 8: Urea sensor system
- 9: Receiver
- 11: Computing unit
- 13: Transmitter
- 15: Transducer
- 17: Housing
- 19: Data line
- 21: Reflector
- 23: Distance
- 25: Path length
- 27: Transmitted signal
- 29: Received signal
- 31: Signal value
- 33: Deviation
- 35: Threshold value
- 37: Bubble confirmation signal
- 39: Time of flight
- 41: Envelope
- 43: Amplitude
- 45: Predefined reference value
- 47: Frequency spectrum
- 49: Frequency of maximum
- 51: Maximum of frequency spectrum
- 53: Predefined reference value

## Claims

1. System (7) for detecting the presence of bubbles (5) in aqueous solutions (3), in particular in urea solutions (4), the system (7) comprising at least one ultrasonic receiver (9) and at least one computing unit (11), wherein the system (7) is configured
• to receive at least two signals (27, 29) having different frequencies (f) after passage through the solution (3);
• to compute at least one signal value (31) for each received signal (27, 29), the signal value (31) representing a defined signal property (39, 43, 47);
• to compare the computed signal values (31) for the at least two signals (27, 29) with each other and/or with at least one predefined reference value (53);
• to compute at least one deviation (33) of the at least two computed signal values (31) from each other and/or between at least one computed signal value (31) and the at least one predefined reference value (53);
• and to generate at least one bubble confirmation signal (37) that confirms the presence of bubbles (5) in the solution (3) if the at least one deviation (33) is larger than a predefined threshold value (35).

2. System (7) according to claim 1, wherein the system (7) further comprises at least one ultrasonic transmitter (13) for generating the at least two signals (27, 29).

3. System (7) according to claim 1 or 2, wherein the system (7) further comprises at least one reflector (21) which is spaced apart from and arranged opposite to the at least one receiver (9) in order to reflect signals (27, 29) to the receiver (9).

4. System (7) according to claim 2 or 3, wherein the system (7) comprises at least one ultrasonic transducer (15) in which the at least one ultrasonic transmitter (13) and the at least one ultrasonic receiver (9) are combined.

5. System (7) according to any of claims 1 to 4, wherein the signal value (31) comprises at least one of the following: the signal amplitude (43), the time of flight (39), the frequency (49) at which a frequency spectrum (47) has its maximum (51).

6. Method for detecting the presence of bubbles (5) in an aqueous solution (3), in particular in a urea solution (4), the method comprising the steps of:
• receiving at least two signals (27, 29) having different frequencies (f) after passage through the solution (3);
• computing at least one signal value (31) for each signal (27, 29), the signal value (31) representing a defined signal property (39, 43, 47);
• comparing the computed signal values (31) for the at least two signals (27, 29) with each other and/or with at least one predefined reference value (53);
• computing at least one deviation (33) of the at least two computed signal values (31) from each other and/or between at least one computed signal value (31) and the at least one predefined reference value (53);
• and generating at least one bubble confirmation signal (37) that confirms the presence of bubbles (5) in the solution (4) if the at least one deviation (33) is larger than a predefined threshold value (35).

7. Method according to claim 6, wherein at least two signals (27, 29) with different frequencies (f) are emitted into the solution (3) prior to receiving the signals (27, 29).

8. Method according to claim 6 or 7, wherein the time of flight (39) for each of the at least two signals (27, 29) is computed and used as a signal value (31) for the comparison.

9. Method according to claim 8, wherein envelopes (41) of the at least two received signals (27, 29) are calculated and used for computing the time of flight (39) of the signals (27, 29).

10. Method according to any of claims 6 to 9, wherein the amplitude (43) of each of the received signals (27, 29) is computed and the amplitudes (43) are used for the comparison.

11. Method according to claim 10, wherein the amplitudes (43) of the received signals (27, 29) are first referenced using a predefined reference value (45) for each received signal (27, 29) before comparing.

12. Method according to any of claims 6 to 11, wherein a frequency spectrum (47) is computed for each received signal (27, 29) and the frequencies (49) at which the spectra (47) have their maxima (51) are compared.

13. Method according to claim 12, wherein fast Fourier transformations are used for computing the frequency spectra (47).

14. Urea sensor system (8) for measuring at least one property of a urea solution (4) in a volume (1), in particular for measuring the speed of sound in the urea solution (4), the urea sensor system (8) comprising at least one system (7) according to any of claims 1 to 5.
